(19) **Europäisches Patentamt**

**European Patent Office**

**Office européen des brevets**

(11) Veröffentlichungsnummer: **0 422 533 A2**

(12) **EUROPÄISCHE PATENTANMELDUNG**

(21) Anmeldenummer: 90119202.1

(22) Anmeldetag: 06.10.90

(51) Int. Cl.5: **C09D 5/02**, C09D 7/12

(30) Priorität: 12.10.89 AT 2350/89

(43) Veröffentlichungstag der Anmeldung:
17.04.91 Patentblatt 91/16

(84) Benannte Vertragsstaaten:
**BE DE ES FR GB IT NL SE**

(71) Anmelder: **Vianova Kunstharz Aktiengesellschaft**

**A-8402 Werndorf(AT)**

(72) Erfinder: **Die Erfinder haben auf ihre Nennung verzichtet**

(54) **Verwendung von Acrylatcopolymerisaten als Additive für wässrige kationische Lacksysteme.**

(57) Die Erfindung betrifft die Verwendung von Hydroxylgruppen enthaltenden Acrylatcopolymerisaten als Additive für wäßrige kationische Lacksysteme zur Verhinderung von Oberflächenstörungen ohne Beeinträchtigung der Haftung von Folgeschichten, insbesonders von PVC-hältigen Lackmaterialien.

Die Acrylatcopolymerisate weisen neben mit Säuren neutralisierbaren Aminogruppen in ausgewählter Menge aus Monoestern der (Meth)acrylsäure mit Diolen stammende Hydroxylgruppen auf.

Die Additive werden in einer Menge von 0,5 bis 5,0 Gew.-%, berechnet auf Feststoff und bezogen auf den Feststoffanteil des Bindemittels im Lack, zugesetzt.

# VERWENDUNG VON ACRYLATCOPOLYMERISATEN ALS ADDITIVE FÜR WÄSSRIGE KATIONISCHE LACK-SYSTEME.

Die Erfindung betrifft die Verwendung von Hydroxylgruppen enthaltenden Acrylatcopolymerisaten als Additive für wäßrige kationische Lacksysteme, insbesonders für kathodisch abscheidbare Elektrotauchlacke, zur Verhinderung von Oberflächstörungen ohne Beeinträchtigung der Haftung von Folgeschichten, insbesonders von PVC-hältigen Lackmaterialien.

Bekanntlich zeigen wäßrige Systeme bei der Filmbildung eine erhöhte Empfindlichkeit gegenüber Fremdstoffen im Lackmaterial oder auf dem zu lackierenden Substrat, die sich in Form von Kratern, Dellen oder ähnlichen Oberflächstörungen äußert. Diese Empfindlichkeit kann bei Grundierungen in manchen Fällen durch Erhöhung des Pigmentanteils vermieden oder zumindest verringert werden. Dieser Weg ist jedoch sehr oft, insbesonders bei dekorativen Lackierungen nicht gangbar, da er zu einer Verminderung der Beständigkeitseigenschaften bzw. zu Einbußen bei den optischen Eigenschaften führt. Bei der Elektrotauchlackierung ist überdies eine Erhöhung des Pigment-Bindemittelverhältnisses aus verfahrenstechnischen Gründen nur in einem sehr beschränkten Ausmaß möglich.

Eine Herabsetzung der Empfindlichkeit wäßriger Lacksysteme gegen Oberflächstörungen kann auch durch Zusatz von grenzflächenaktiven Substanzen erfolgen. Häufig tritt dabei wegen einer zu großen Unverträglichkeit der Additive mit dem Lackmaterial eine Anreicherung der Additive im Bereich der Lackoberfläche ein, wodurch die Zwischenschichthaftung, d. h. die Haftung weiterer Lackschichten, insbesonders solcher auf Basis von Vi nylchlorid-(co)-polymeren, wesentlich verschlechtert wird. Beschichtungen auf PVC-Basis werden bekanntlich in großem Ausmaß als Unterbodenschutz in der Automobilindustrie eingesetzt und werden großflächig auf der kathodisch abgeschiedenen Grundierung appliziert. Zur Erzielung des geforderten Steinschlagschutzes ist die Zwischenschichthaftung bei diesen Lackschichten von ausschlaggebender Bedeutung.

Zur Vermeidung einer extremen Unverträglichkeit werden in der gegenwärtigen Praxis bei anionischen Lacken auf der Basis von Carboxylatgruppen aufweisenden wasserlöslichen Lackbindemitteln polymere Zusatzmittel eingesetzt, die Copolymere von sauren Monomeren und neutralen Estermonomeren, hauptsächlich von (Meth)acrylmonomeren, darstellen. Durch eine entsprechende Abstimmung des Säureanteils kann bei diesen Systemen eine optimale Wirksamkeit erreicht werden, doch besteht auch in diesem Fall eine große Empfindlichkeit gegenüber Überdosierung, die unmittelbar zu den beschriebenen Haftungsschwierigkeiten führt.

In den AT-PSS 382.385, 383.137 und 382.630 werden kathodisch abscheidbare Bindemittel beansprucht, bei denen eine verbesserte PVC-Haftung aufgrund ihres spezifischen Molekülaufbaus gegeben ist. Eine Wirkung bezüglich der Vermeidung von Oberflächstörungen kann bei diesen Produkten nicht beobachtet werden.

Es wurde nun gefunden, daß bei kationischen Lacksystemen, insbesonders bei kathodisch abscheidbaren Elektrotauchlacken, die obengenannten Oberflächstörungen überwunden werden können, ohne daß die Haftungseigenschaften in einem merklichen Ausmaß verschlechtert werden, wenn als Additive Acrylatcopolymerisate eingesetzt werden, die aus protonierbare N-basische Gruppen enthaltenden Monomeren, Monoestern der (Meth)acrylsäure mit Diolen, (Meth)acrylsäureestern und gegebenenfalls Styrol, aufgebaut sind.

Die vorliegende Erfindung betrifft demgemäß die Verwendung von Hydroxylgruppen enthaltenden kationischen Acrylatcopolymerisaten, welche aus

(A) 5 bis 40 Gew.-% sekundäre oder tertiäre Aminogruppen aufweisende Acrylmonomere,

(B) 5 bis 50 Gew.-% Monoester der (Meth)acrylsäure mit Diolen, deren Alkylenreste 2 bis 6 C-Atome oder deren Oxyalkylenreste insgesamt 4 bis 12 C-Atome aufweisen,

(C) 15 bis 89,5 Gew.-% (Meth)acrylsäurealkylester, deren Alkylreste 1 bis 12 C-Atome aufweisen,

und gegebenenfalls

(D) bis zu 10 Gew.-% Styrol bestehen, wobei die Summe der Prozentzahlen der Komponenten (A) bis (D) 100 ergeben muß, und welche eine Aminzahl von 15 bis 150 mg KOH/g, vorzugsweise von 30 bis 120 mg KOH/g, und eine Hydroxylzahl von 15 bis 250 mg KOH/g, vorzugsweise von 20 bis 200 mg KOH/g, aufweisen, und deren protonierbare Gruppen zu mindestens 50 % mit einer organischen Säure, vorzugsweise mit einer niederen Carbonsäure oder Hydroxycarbonsäure, neutralisiert sind, als Additive für wäßrige kationische Lacksysteme zur Verhinderung von Oberflächstörungen.

Durch die erfindungsgemäßen Additive werden Filmstörungen, die durch die Oberflächenspannung der wäßrigen Phase im Lack bedingt sind, wesentlich vermindert, ohne daß Probleme bei der Zwischenschichthaftung, d. h. der Haftung weiterer Lackschichten, insbesonders bei PVC-hältigen Lackmaterialien als Folgeschicht, auftreten.

Die Acrylatcopolymerisate mit der im Hauptanspruch angegebenen Zusammensetzung und Charakteristik werden in üblicher Weise durch Lösungspolymerisation in wassermischbaren oder mindestens wassertoleranten Lösemitteln, wie niedrigen Alkoholen, vorzugsweise Butanol oder Glykolmono- oder -diethern, hergestellt. Es können auch Gemische dieser Lösemittel, z. B. Butanol mit Methoxypropanol, verwendet werden.

Die Acrylatcopolymerisate werden durch folgende Kennwerte charakterisiert:

Aminzahl: 15 bis 150 mg KOH/g, vorzugsweise 30 bis 120 mg KOH/g,

Hydroxylzahl: 15 bis 250 mg KOH/g, vorzugsweise 20 bis 200 mg KOH/g.

Die eingesetzten basischen Acrylmonomeren (A) weisen sekundäre oder tertiäre Aminogruppen auf. Eine bevorzugte Gruppe dieser Monomeren sind die Mono- oder Dialkylaminoalkyl(meth)acrylate, insbesonders N,N-Dimethyl-, N,N-Diethyl- oder N,N-Dipropylaminoethyl(meth)acrylat oder das N-tert-Butylaminoethyl(meth)acrylat.

Anstelle dieser Estermonomeren können auch entsprechende Umsetzungsprodukte aus Glycidyl(meth)acrylat und sekundären Alkylaminen bzw. Alkanolaminen eingesetzt werden. Die Einführung von sekundären oder tertiären Aminogruppen erfolgt dabei vorzugsweise durch nachträgliche polymeranaloge Umsetzung der Glycidylgruppen eines entsprechenden Copolymeren mit primären oder vorzugsweise sekundären Aminen.

Die übrigen in den Copolymeren enthaltenen Monomeren sind im Hauptanspruch eindeutig definiert.

Die basischen Gruppen der Acrylatcopolymerisate werden mindestens zu 50 % mit einer organischen Säure neutralisiert. Vorzugsweise erfolgt die Neutralisation mit einer niederen Carbonsäure oder Hydroxycarbonsäure. Beispiele für solche Neutralisationsmittel sind Ameisensäure, Essigsäure oder Milchsäure.

Die Acrylatcopolymerisate werden gleichzeitig mit der Zugabe des Neutralisationsmittels oder nach der Neutralisation mit Wasser auf einen für die Anwendung vorteilhaften Festkörpergehalt verdünnt. Üblicherweise erfolgt der Einsatz als 50 ± 15 %ige Lösung.

Die erfindungsgemäßen Additive werden in einer Menge von 0,5 bis 5,0 Gew.-%, vorzugsweise von 1,0 bis 3,0 Gew.-%, berechnet auf Feststoff und bezogen auf den Feststoffanteil des Bindemittels im Lack, eingesetzt.

Die erfindungsgemäßen Additive können für alle Typen von Lacken, die mit kationischen, wasserverdünnbaren, auch als "wasserlöslich" bezeichneten, Bindemitteln formuliert werden, verwendet werden. Diese Bindemittel können Kondensationsharze, Copolymerisate aus alpha, beta-ungesättigten Monomeren oder Additionsharze, wie modifizierte Epoxidharzester, sein. Sie tragen üblicherweise eine ausreichende Zahl von protonierbaren Gruppen, durch deren Neutralisation mit Säuren das Bindemittel in die wasserverdünnbare Form übergeführt wird. Als besonders vorteilhaft haben sich der erfindungsgemäßen Additive bei kathodisch abscheidbaren Elektrotauchlacken erwiesen.

Die Prüfung der erfindungsgemäßen Additive erfolgt vorteilhaft durch Einmischen geringer Mengen einer störenden Substanz in den verarbeitungsfertigen Klarlack des Bindemittels. Als für diesen Test besonders gut geeignet haben sich styrol- bzw. vinyltoluolmodifizierte Alkydharze, gelöst in Lackbenzin und/oder anderen organischen Lösemitteln, erwiesen. Der verunreinigte Klarlack wird auf ein entfettetes Stahlblech abgeschieden und unter den für das Bindemittel erforderlichen Bedingungen gehärtet. Die Prüfung der Zwischenschichthaftung erfolgt nach Applikation einer oder mehrerer Folgeschicht(en) (PVC-Schicht, Füller oder Decklack) durch Beurteilung des gesamten Lackaufbaus mittels Gitterschnittprüfung, gegebenenfalls nach Korrosionsbelastung.

Die folgenden Beispiele erläutern die Erfindung, ohne sie in ihrem Umfang zu beschränken. Alle Angaben in Teilen oder Prozenten beziehen sich, soferne nichts anderes angegeben ist, auf Gewichtseinheiten.

Beispiele 1 - 11

(Herstellung der Additive unter Verwendung von Alkylaminoethyl(meth)acrylatmonomeren)

Die Herstellung der Additive erfolgt in der nachstehend angegebenen Weise. Die Mengen der eingesetzten Rohstoffe, sowie die Kennwerte der Produkte, sind in Tab. 1 zusammengefaßt.

Teil I wird in das Reaktionsgefäß gefüllt und auf 85° C erhitzt. Teil II und Teil III werden innerhalb von 5 Stunden bei 85 - 90° C gleichmäßig zugegeben. Nach Beendigung der Zugaben wird 2 Stunden bei 90° C gehalten und das Polymerisationsende durch Festkörperbestimmung kontrolliert.

Nach Erreichen des theoretischen Festkörpers werden bei 40°C 100 % der Aminogruppen mit einer niedermolekularen organischen Säure (Ameisensäure, Essigsäure oder Milchsäure) neutralisiert und das Produkt mit deionisiertem Wasser auf einen Festkörpergehalt von 50 % verdünnt (diese 50%ige Additivlösung ist direkt einsetzbar).

Tabelle 1

| Beispiel | 1 | 2 | 3 | 4 | 5 | 6 | 7 | 8 | 9 | 10 | 11 |
|---|---|---|---|---|---|---|---|---|---|---|---|
| Teil I (Lösungsmittel) | | | | | | | | | | | |
| Methoxypropanol | 32,8 | 32,8 | 32,8 | | | 32,8 | | 32,8 | 38,2 | | 38,2 |
| Ethylenglykolmonobutylether | | | | 32,8 | 32,8 | | 32,8 | | | 32,8 | |
| Teil II (Monomerenmischung) | | | | | | | | | | | |
| N,N-Dimethylaminoethylmethacrylat | 15 | 25 | | | 30 | | 40 | | 10 | | 25 |
| N-t-Butylaminoethylmethacrylat | | | 30 | 15 | | 25 | | | | 30 | |
| N,N-Dimethylaminoethylacrylat | | | | | | | | 20 | | | |
| Hydroxyethylmethacrylat | 27 | 20 | | | | 22 | | 25 | | 37 | |
| Tripropylenglykolmonomethacrylat | | | | | | | | | 25 | | |
| Hydroxyethylacrylat | | | 30 | | 22 | | | | | | |
| 4-Hydroxybutylacrylat | | | | | | | 15 | | | | |
| 2-Hydroxypropylmethacrylat | | | | 18 | | | | | 20 | | 25 |
| n-Butylacrylat | 58 | 25 | 40 | 30 | 35 | 39 | | 43 | | 33 | 21 |
| 2-Ethylhexylacrylat | | 25 | | 37 | | | 45 | | 38 | | 29 |
| Methylmethacrylat | | | | | | | | 12 | 7 | | |
| Styrol | | 5 | | | 13 | 14 | | | | | |
| Teil III (Katalysatorlösung) | | | | | | | | | | | |
| Methoxypropanol | 10 | 10 | 10 | | | 10 | | 10 | 10 | | 10 |
| Ethylenglykolmonobutylether | | | | 10 | 10 | | 10 | | | 10 | |
| Azobisisobutyronitril | 2 | 2 | 2 | 2 | 2 | 2 | 2 | 2 | 2 | 2 | 2 |
| Teil IV (Neutralisationsmittel) | | | | | | | | | | | |
| Ameisensäure | 4,4 | 7,3 | | | | 6,2 | 11,7 | | 2,9 | | |
| Essigsäure | | | 9,7 | 4,9 | | | | 8,4 | | | 9,6 |
| Milchsäure | | | | | 17,2 | | | | | 14,6 | |
| Teil V (Verdünnung) | | | | | | | | | | | |
| Wasser dionisiert | 52,8 | 49,9 | 47,5 | 52,3 | 40,0 | 51,0 | 45,5 | 48,8 | 54,3 | 42,6 | 47,6 |
| KENWERTE | | | | | | | | | | | |
| Festkörpergehalt, % | 50 | 50 | 50 | 50 | 50 | 50 | 50 | 50 | 50 | 50 | 50 |
| Aminzahl mg KOH/g | 53,5 | 89,2 | 90,8 | 45,4 | 107,0 | 75,7 | 142,7 | 78,3 | 35,7 | 90,8 | 89,2 |
| Hydroxylzahl mg KOH/g | 116,3 | 86,2 | 144,8 | 70,0 | 106,2 | 94,8 | 58,3 | 107,7 | 114,6 | 159,4 | 97,2 |

Beispiele 12 und 13

(Herstellung der Additive durch polymeranaloge Umsetzung von glycidylgruppenhaltigen Copolymeren mit sekundären Alkylaminen bzw. Alkanolaminen)

Die glycidylgruppenhaltigen Copolymeren werden in üblicher Weise hergestellt (analog Beispiel 1 - 11). Bei 80°C erfolgt innerhalb von 30 Minuten die Zugabe der Aminlösung (Teil III a). Die Temperatur wird dann auf 100°C gesteigert und zur Vervollständigung der Reaktion weitere 90 Minuten gehalten. Die Neutralisation und Verdünnung erfolgt wie bei den Beispielen 1 - 11.
Die Ansätze weisen folgende Zusammensetzung auf.

| Tabelle 2 Beispiel | 12 | 13 |
|---|---|---|
| **Teil I** | | |
| Methoxypropanol | 22,8 | 22,8 |
| **Teil II** | | |
| Butylacrylat | 49,3 | 32,9 |
| Glycidylmethacrylat | 20 | 20 |
| Hydroxyethylacrylat | -- | 20 |
| Styrol | 12 | 9 |
| **Teil III** | | |
| Azobisisobutyronitril | 2 | 2 |
| Methoxypropanol | 10 | 10 |
| **Teil III a** | | |
| Methoxypropanol | 10 | 10 |
| Diisopropanolamin | 18,7 | -- |
| Diisobutylamin | -- | 18,1 |

Tabelle 2 (Fortsetzung)

| Beispiel | 12 | 13 |
|---|---|---|
| **Teil IV** | | |
| Ameisensäure | 6,5 | 6,5 |
| **Teil V** | | |
| Wasser, deionisiert | 50,7 | 50,7 |
| **KENNWERTE** | | |
| Festkörpergehalt, % | 50 | 50 |
| Aminzahl, mg KOH/g | 78,9 | 78,9 |
| Hydroxylzahl, mg KOH/g | 157,5 | 96,6 |

Prüfung der erfindungsgemäßen Additive

Die Prüfung der Additive erfolgt einerseits auf ihre Wirksamkeit bei der Vermeidung von Oberflächenstörungen bei der Filmbildung der Lacke, andererseits auf ihren Einfluß auf die Haftung von Folgeschichten, insbesondere solchen aus PVC-Materialien.

(a) Herstellung der Prüflacke I und II

Die entsprechend den in (b) gemachten Angaben hergestellten 15%igen wäßrigen Klarlacke (1) und (2) werden mit 5 Gew.-% (bezogen auf Festharze) eines styrol- bzw. vinyltoluolmodifizierten Alkydharzes in Form einer mit Ethylenglykolmonobutylether/Xylol (1:1) auf einen Festkörpergehalt von 10 % verdünnten Lösung, versetzt und gründlich gemischt. (Als Alkydharz kann beispielsweise das VIALKYD AV 462, Lieferform 60 % in Testbenzin (VIANOVA, AT) oder eine äquivalente Type verwendet werden.)

(b) Herstellung der Klarlacke

Klarlack (1)

500 Tle eines Epoxidharzes auf Basis von Bisphenol A (Epoxidäquivalentgewicht ca. 500) werden in 214 Tlen Propylenglykolmonomethylether gelöst und bei 110°C mit 83 Tlen eines Halbesters aus Phthalsäureanhydrid und 2-Ethylhexanol in Gegenwart von 0,5 g Triethylamin als Katalysator bis zu einer Säurezahl von weniger als 3 mg KOH/g reagiert. Dann werden 120 Tle eines NH-funktionellen Oxazolidins aus Aminoethylethanolamin, 2-Ethylhexylacrylat und Formaldehyd, sowie 26 Tle Diethylaminopropylamin zugefügt und der Ansatz bei 80°C bis zu einem Epoxidwert von praktisch 0 reagiert. Der Ansatz wird mit 200 Tlen Propylenglykolmonomethylether verdünnt.

70 Tle (Festharz) dieses Bindemittels werden mit 30 Tlen (Festharz) einer Vernetzungskomponente auf Basis von modifizierten Malonestern, entsprechend Beispiel 1 der AT-PS 379.602 kombiniert. Nach Zugabe von 1 % Blei (berechnet als Metall) in Form von Bleioctoat und 40 Millimol Ameisensäure pro 100 g Festharz wird mit dedeioniertem Wasser ein 15%iger Klarlack hergestellt.

Klarlack 2

228 Tle Bisphenol A (1 Mol) werden mit 260 Tlen Diethylaminopropylamin (2 Mol) und 66 Tlen Paraformaldehyd, 91 % (2 Mol) in Gegenwart von 131 Tlen Toluol als Azeotropschleppmittel bis zu Abtrennung von 42 Tlen Reaktionswasser umgesetzt. Nach Kühlen auf 30°C werden innerhalb 45 Minuten 608 Tle (2 Mol) eines mit 2-Ethylhexanol halbblockierten Toluylendiisocyanats zuge geben. Sobald ein NCO-Wert von praktisch 0 erreicht ist, wird das Produkt in 152 Tlen Diethylenglykoldimethylether gelöst.

1400 Tle dieser Lösung werden mit einer Lösung von 190 Tlen eines Epoxidharzes auf Basis von Bisphenol A (Epoxidäquivalentgewicht ca. 190) und 250 Tlen (1 Mol) eines Glycidylesters einer gesättigten, tertiären $C_9$-$C_{11}$-Monocarbonsäure in 389 Tlen Diethylenglykoldimethylether versetzt und bei 95 bis 100°C bis zu einem Epoxidwert von 0 ungesetzt. Das Produkt wird mit 0,6 Tlen/100 g Festharz (berechnet als Metall) eines Zinn-Katalysators, z. B. Dibutylzinndilaurat, versetzt und nach Zusatz von 40 Millimol Ameisensäure pro 100 g Festharz mit deioniertem Wasser auf einen Festkörpergehalt von 15 % verdünnt.

(c) Prüfung der erfindungsgemäßen Additive

Die in der nachfolgenden Tabelle 3 angegebenen Prüflacke und Mischungen werden kathodisch auf zinkphosphatiertes Stahlblech abgeschieden und 30 Minuten bei 180°C gehärtet. Die resultierende Trokkenfilmstärke soll 25 ± 5 μm betragen. Die Filmfläche wird in Bezug auf die Krater- bzw. Dellenbildung beurteilt (0 : keine Krater, 1 : einzelne Krater, 2 : deutliche Kraterneigung, 3 : starke Kraterbildung).

Zur Prüfung der Haftfestigkeit von PVC-Materialien auf dem kathodisch abgeschiedenen Lack wird die PVC-Schicht in Form eines Streifens von 2 mm Dicke und 1 cm Breite 30 Minuten nach dem Einbrennen der K-ETL-Grundierung appliziert und 7 Minuten bei 140°C (Objekttemperatur) gehärtet. Die Prüfung der Haftung erfolgt 1 Stunde nach dem Einbrennen. Beurteilt wird dabei die Abziehbarkeit der PVC-Beschichtung (Note 1 = nicht abziehbar, Beschichtung bricht ohne Ablösung vom Untergrund, Note 5 = leicht

7

abziehbar, Haftung mangelhaft).

Als PVC-Materialien wurden bei der Prüfung sowohl ein handelsüblicher Unterbodenschutz (UBS) (Stankiewicz2252 der Fa. Stankiewicz GmbH, Celle, BRD) als auch eine in der Automobilindustrie eingesetzte Nahtabdichtungsmasse (NA) (Dekalin 9003 der Fa. Dekalin, Deutsche Klebstoff-Werke, Hanau, BRD) verwendet.

Tabelle 3

| Kraterbildung bei | | | |
|---|---|---|---|
| Additiv gemäß Bsp. | Zusatz Gew.-% | Prüflack | |
| | | I Note | II Note |
| ohne Additiv | | 3 | 2 - 3 |
| 1 | 1 | 0 - 1 | 0 - 1 |
| | 3 | 0 | 0 |
| 2 | 1 | 0 - 1 | 0 |
| | 3 | 0 | 0 |
| 3 | 1 | 0 - 1 | 0 - 1 |
| | 3 | 0 | 0 |
| 4 | 1 | 0 | 0 |
| | 3 | 0 | 0 |
| 5 | 1 | 0 | 0 |
| | 3 | 0 | 0 |
| 6 | 1 | 0 - 1 | 0 - 1 |
| | 3 | 0 | 0 |
| 7 | 1 | 0 - 1 | 1 |
| | 3 | 0 | 0 - 1 |
| 8 | 1 | 0 | 0 |
| | 3 | 0 | 0 |
| 9 | 1 | 0 - 1 | 0 |
| | 3 | 0 | 0 |
| 10 | 1 | 0 | 0 |
| | 3 | 0 | 0 |
| 11 | 1 | 0 - 1 | 0 - 1 |
| | 3 | 0 | 0 |
| 12 | 1 | 0 - 1 | 1 |
| | 3 | 0 | 0 |
| 13 | 1 | 0 - 1 | 0 |
| | 3 | 0 | 0 |

Die Prüfung der Zwischenschichthaftung gegenüber UBS und NA ergibt keine auffallenden Unterschiede zwischen dem Blindwert (Prüflack I: UBS Note 3, NA Note 2; Prüflack II: UBS Note 2, NA Note 2) und den mit den Additiven versetzten Prüflacken.

**Ansprüche**

1. Verwendung von Hydroxylgruppen enthaltenden kationischen Acrylatcopolymerisaten, welche aus
(A) 5 bis 40 Gew.-% sekundäre oder tertiäre Aminogruppen aufweisende Acrylmonomere,
(B) 5 bis 50 Gew.-% Monoester der (Meth)acrylsäure mit Diolen, deren Alkylenreste 2 bis 6 C-Atome oder deren Oxyalkylenreste insgesamt 4 bis 12 C-Atome aufweisen,
(C) 15 bis 89,5 Gew.-% (Meth)acrylsäurealkylester, deren Alkylreste 1 bis 12 C-Atome aufweisen, und gegebenenfalls
(D) bis zu 10 Gew.-% Styrol bestehen, wobei die Summe der Prozentzahlen der Komponenten (A) bis (D) 100 ergeben muß, und welche eine Aminzahl von 15 bis 150 mg KOH/g, vorzugsweise von 30 bis 120 mg KOH/g, und eine Hydroxylzahl von 15 bis 250 mg KOH/g, vorzugsweise von 20 bis 200 mg KOH/g, aufweisen, und deren protonierbare Gruppen zu mindestens 50 % mit einer organischen Säure, vorzugsweise mit einer niederen Carbonsäure oder Hydroxycarbonsäure, neutralisiert sind, als Additive für wäßrige kationische Lacksysteme zur Verhinderung von Oberflächenstörungen.

2. Verwendung von Acrylatcopolymerisaten nach Anspruch 1 in einer Menge von 0,5 bis 5,0 Gew.-%, vorzugsweise von 1,0 bis 3,0 Gew.-%, berechnet auf Feststoff und bezogen auf den Feststoffanteil des Bindemittels im Lack, für den in Anspruch 1 angegebenen Zweck.